# EUROPEAN PATENT SPECIFICATION

(11) **EP 2 468 478 B1**
(45) Date of publication and mention of the grant of the patent: **20.02.2013**
(21) Application number: 11191024.6
(22) Date of filing: 28.11.2011
(51) Int. Cl.: B29C 49/46, B29C 31/00

(54) **Process for sterilising and introducing forming moulds into an aseptic bottling line**
Verfahren zum Sterilisieren und Einführen von Formen in eine aseptische Abfüllanlage
Procédé pour stériliser et introduire des moules de formage dans une chaîne d'embouteillage aseptique

(30) Priority: 23.12.2010 IT PR20100095
(43) Date of publication of application: 27.06.2012
(73) Proprietor: Gea Procomac S.p.A., 43038 Sala Baganza (PR) (IT)
(72) Inventor: Pagliarini, Paolo, 43123 PARMA (IT); Antiga, Simone, 43013 LANGHIRANO (PR) (IT)
(74) Representative: Gotra, Stefano

(56) References cited:
- EP-A1- 2 246 176
- WO-A1-2008/055685

## Description

The present invention relates to a process for sterilising and introducing forming moulds into an aseptic bottling line.

The need to sterilise forming moulds developed only recently, together with the evolution of aseptic technology. European patent application EP2246176, filed by the present Applicant discloses the preamble of claim 1 and describes the use of an isolating device suitable for defining a controlled-contamination environment housing at least the forming machine (blower) and, preferably, also the kiln and other work stations of a bottling line. The movement organs of the moulds of the blower, at which dirt tends to collect (dust, lubricating oils) are located outside the insulator such as to reduce the risks of contamination in the line.

With this structure of the bottling line, the problem of sterilisation of the forming moulds arises. As is known, each mould is constituted by two half-portions or half-moulds, and by a profiling element of the bottom of the recipient, commonly known in the sector by the term "bottom".

A first idea was to subject the forming moulds to a preliminary cycle of chemical or heat sterilisation out of the bottling line and, successively, to a further chemical sterilisation in-line, i.e. after the installation of the moulds on the blower and together with the sterilisation of the forming machine (blower).

However, the above-illustrated solution would lead to various drawbacks.

Firstly, in case of format changing, the production process would have to be stopped so that the moulds could be changed. Further, there would be a high consumption of sterilising agent, as well as use of energy for the functioning of the plant. Finally, the interface zone between the moulds and the relative mould holders is not easily accessible by the sterilising agents. In this context, the technical aim at the basis of the present invention is to provide a process for sterilising and introducing forming moulds into an aseptic bottling line, which obviates the drawbacks in the prior art cited herein above.

In particular, an aim of the present invention is to provide a process for sterilising and introducing forming moulds into an aseptic bottling line, which enables management of the change-format rapidly, limiting the halts in the production cycles.

A further aim of the present invention is to make available a process for sterilising and introducing forming moulds into an aseptic bottling line, which enables maintaining the consumption of sterilising agents and energy at low levels.

A further aim of the present invention is to provide a process for sterilising and introducing forming moulds into an aseptic bottling line, which also enables uniform sterilisation of the mould holders.

The set technical objective and the specified aims are substantially attained by a process for sterilising and introducing forming moulds into an aseptic bottling line, comprising the technical characteristics set out in one or more of the accompanying claims.

Further characteristics and advantages of the present invention will more fully emerge from the description, provided by way of non-limiting example, of a preferred but not exclusive embodiment of a process for sterilising and introducing forming moulds into an aseptic bottling line, as illustrated in the appended drawings, in which:

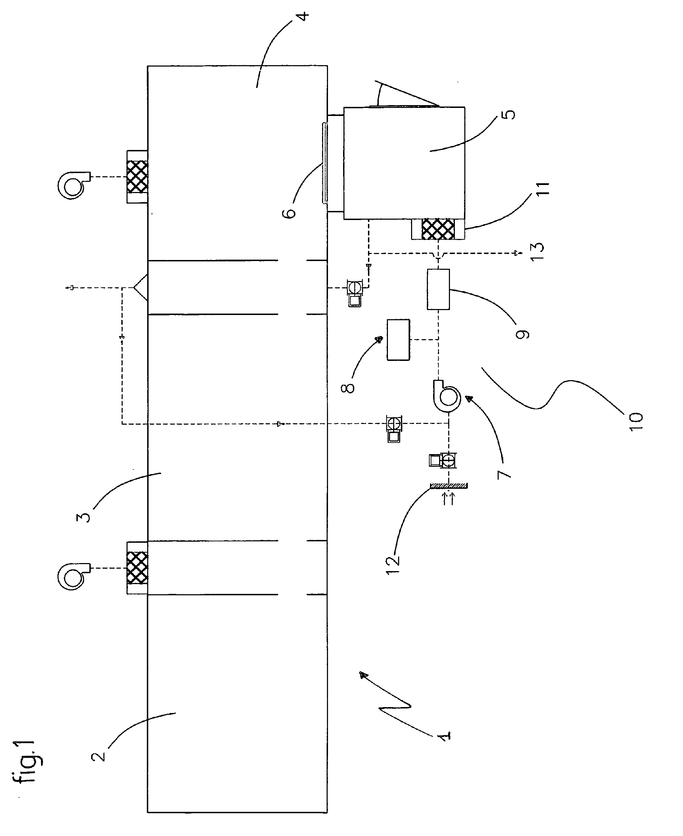

- figure 1 is a sterilising system for forming moulds, employing the process according to the present invention, in a schematic view;

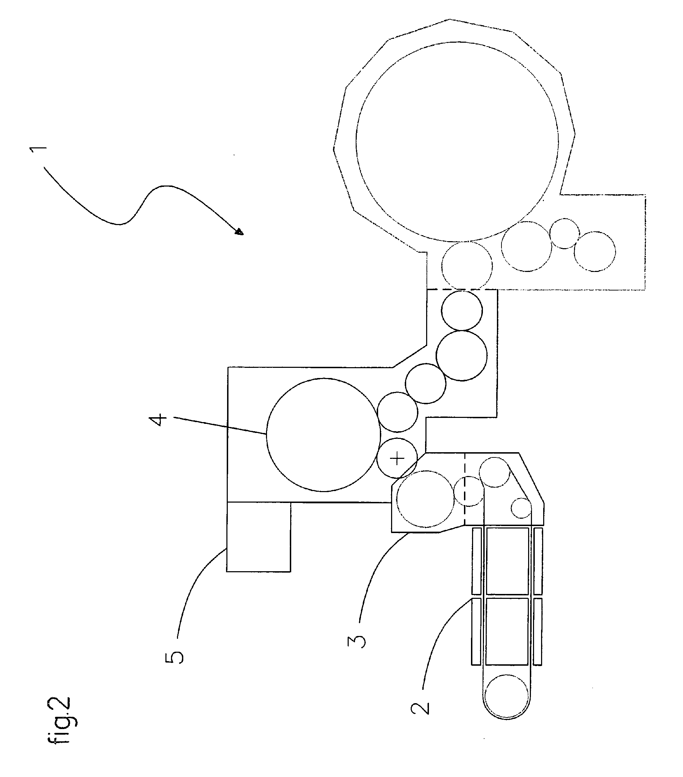

- figure 2 is an aseptic bottling line in which the depositing chamber of the sterilisation system of figure 1 is visible, from above and in a simplified view.

With reference to the figures, number 1 denotes an aseptic bottling line comprising a heating station 2 of preforms made of a plastic material, a sterilising station 3 of the preforms and a forming station 4 of the recipients starting from the heated preforms. In particular, in the forming station 4 a rotating carousel blower is installed, bearing a plurality of forming moulds of recipients by stretch-blowing. In a further embodiment (not illustrated), the bottling line 1 comprises a filling and capping station of the formed recipients.

A depositing chamber 5 of forming moulds is arranged by a flank of the forming station 4. In the embodiment described and illustrated herein, the depositing chamber 5 is separated from the forming station 4 by a hermetically-closed door 6. The depositing chamber 5, which is part of a sterilising system 10 of the forming moulds, is configurable in at least two states. In a first state, the depositing chamber 5 is insulated from the outside so that the moulds are subjected to the action of a sterilising agent (for example, hydrogen peroxide). In a second state, the depositing chamber 5 is connectable in fluid communication with the forming station 4 such that the moulds can be transferred thereto.

In the embodiment described and illustrated herein, the passage of the depositing chamber 5 from the first state to the second state is obtained with the opening of the hermetically-sealed door 6.

The sterilising system 10 of the moulds comprises a pressurising plant 7 operatively active on the depositing chamber 5 in such a way as to impose pressure values that are different in the two above-indicated states. In particular, when the depositing chamber 5 is in the first state, a first predefined pressure P1 is imposed therein. When the depositing chamber 5 is in the second state, a second predefined pressure P2 is set in it, higher than the first predefined pressure P1. The first pressure P1 is preferably lower than or equal to 20 Pa, while the second predefined pressure P2 is comprised between 20 Pa and 30 Pa.

The pressurising plant 7 is preferably connected to the sterilising station 3 of the preforms such as to receive the residual sterilising agent present therein.

Alternatively, the supply of the sterilising agent to the pressurising plant 7 is done by a dedicated unit 8.

A heating element 9 is preferably interposed between the pressurising plant 7 and the depositing chamber 5, with the aim of preventing condensation of the sterilising agent.

An element (not illustrated) is preferably located upstream of the depositing chamber 5, for regulating the concentration of the sterilising agent in such a way that it stays below a maximum predetermined level L.

For example, the predetermined maximum level L is 2000 ppm.

Upstream of the depositing chamber 5 at least a filtering element 11 is preferably present for filtering the pressurising air.

The process for sterilising and introducing forming moulds in an aseptic bottling line, according to the present invention, is described in the following.

The moulds are arranged internally of the depositing chamber 5. They are preferably subjected to a preliminary sanitisation with a caustic detergent internally of the depositing chamber 5 such as to eliminate any residual organic residues.

Initially the hermetically-sealed door 6 is closed in such a way that the depositing chamber 5 is insulated from the forming station 4. In a case in which the sterilising agent coming from the sterilising station 3 of the preforms or from the dedicated supply unit 8 is in the steam phase, it is heated by the heating element 9 and filtered by the filtering element 11. The filtering element 11 is therefore sterilised by the passage of the sterilising agent. In this way, the walls of the depositing chamber 5 and the moulds are also dried. The sterilising agent is preferably subjected to the action of the regulating element of the concentration, which mixes the agent with external air, and is then filtered by the filtering element 11. The pressurising plant 7 imposes the first pressure P1 predefined internally of the depositing chamber 5.

On completion of the sterilisation of the moulds, the exhausted sterilising agent is evacuated from the depositing chamber 5 via an air intake 12 or a discharging channel 13.

In a further embodiment, no evacuation of the sterilising agent is included from the depositing chamber 5.

At this point, the pressurising plant 7 brings the depositing chamber 5 to the second predefined pressure P2.

The depositing chamber 5 is then set in fluid communication with the forming station 4 such that the depositing chamber 5 and the forming station 4 define a single environment, microbiologically insulated from the outside atmosphere. In the embodiment described and illustrated herein, the depositing chamber 5 is set in fluid communication with the forming station 4 by means of opening the hermetically-sealed door 6. The bottling line 1 temporarily halts the production cycle such as to make transfer of the moulds possible from the depositing chamber 5 to the forming station 4. Once the moulds have been installed, the bottling line 1 starts or restarts its production cycle.

From the above description, the characteristics of the process for sterilising and introducing forming moulds into an aseptic bottling line according to the present invention emerge clearly, as do the advantages thereof.

In particular, thanks to the arranging of the depositing chamber adjacent to the forming station, and thanks to the fact that the transfer of the moulds is done by opening the door between the depositing chamber and the forming station without compromising the sterility of the line, the format change is achieved very rapidly, thus limiting halts in the production cycle.

The sterility of the forming station is guaranteed by the pressurisation plant, which increases the pressure in the depositing chamber during the step of transferring the moulds.

Further, where there is a recuperation of the sterilising agent from the sterilising station of the preforms, consumption of sterilising agent is significantly reduced.

Further, thanks to the fact that the sterilisation of the moulds is done laterally to the blower (for which reason the moulds and the mould-holders are separatedly sterilised) but in an environment which possibly communicates therewith, it is possible to uniformly sterilise all the coupling surfaces, comprising the backs of the moulds, before installing the moulds themselves.

## Claims

1. Process for sterilising and introducing forming moulds in an aseptic bottling line (1), **characterised in that** it comprises the steps of:
introducing a sterilising agent into a depositing chamber (5) housing the moulds, said depositing chamber (5) being separated from the bottling line (1) and being at a first predefined pressure (P1);
establishing a second predefined pressure (P2) internally of the depositing chamber (5), which second pressure is higher than the first predefined pressure (P1);
placing the depositing chamber (5) in fluid communication with a forming station (4) of recipients of the bottling line (1) in such a way that said depositing chamber (5) and said forming station (4) define a single environment which is microbiologically isolated from the outside;
transferring the moulds from the depositing chamber (5) to the forming station (4).

2. Process according to claim 1, wherein the sterilising agent to be introduced into the depositing chamber (5) is recuperated by a sterilising station (3) of the bottling line (1).

3. Process according to claim 1 or 2, further comprising the step of heating the sterilising agent before introducing the sterilising agent into the depositing chamber (5).

4. Process according to any one of the preceding claims, further comprising the step of regulating the concentration of the sterilising agent introduced into the depositing chamber (5) such that said concentration is maintained below a maximum predetermined level (L).

5. Process according to any one of the preceding claims, further comprising the step of evacuating the exhausted sterilising agent from said depositing chamber (5) after having completed its sterilization.

6. Process according to any one of the preceding claims, further comprising the step of sanitising the forming moulds with a caustic detergent internally of the depositing chamber (5) in such a way as to eliminate any organic residues, said step of sanitising occurring before the step of introducing the sterilising agent into the depositing chamber (5).

7. Process according to any one of the preceding claims, further comprising the step of drying the forming moulds and the walls defining the depositing chamber (5) by means of the heated pressurized air.

## Patentansprüche

1. Verfahren zum Sterilisieren und Einführen von Formen in eine aseptische Abfüllanlage (1), **dadurch gekennzeichnet, dass** es folgende Schritte umfasst:
Einführen eines sterilisierenden Wirkstoffs in eine Lagerkammer (5), die die Formen aufnimmt, wobei diese Lagerkammer (5) von der Abfüllanlage (1) getrennt ist und mit einem ersten vorgegebenen Druck (P1) beaufschlagt ist;
Herstellen eines zweiten vorgegebenen Drucks (P2) in der Lagerkammer (5), wobei dieser zweite Druck höher ist als der erste vorgegebene Druck (P1);
Herstellen einer Fluidkommunikation zwischen der Lagerkammer (5) und einer Formungsstation (4) von Behältern der Abfüllanlage (1), sodass die Lagerkammer (5) und die Formungsstation (4) eine einzige Umgebung definieren, die mikrobiologisch von der Außenseite isoliert ist, wobei die Formen von der Lagerkammer (5) zur Formungsstation (4) übergeben werden.

2. Verfahren nach Anspruch 1, wobei der sterilisierende Wirkstoff, der in die Lagerkammer (5) einzuführen ist, durch eine Sterilisierungsstation (3) der Abfüllanlage (1) wiedergewonnen wird.

3. Verfahren nach Anspruch 1 oder 2, zudem umfassend den Schritt des Erhitzens des sterilisierenden Wirkstoffs, bevor der sterilisierende Wirkstoff in die Lagerkammer (5) eingeführt wird.

4. Verfahren nach einem der vorhergehenden Ansprüche, zudem umfassend den Schritt des Regulierens der Konzentration des in die Lagerkammer (5) eingeführten sterilisierenden Wirkstoffs, sodass diese Konzentration unter einem vorgegebenen Höchstniveau (L) beibehalten wird.

5. Verfahren nach einem der vorhergehenden Ansprüche, zudem umfassend den Schritt des Abführens des gebrauchten sterilisierenden Wirkstoffs aus der Lagerkammer (5), nachdem die Sterilisierung abgeschlossen wurde.

6. Verfahren nach einem der vorhergehenden Ansprüche, zudem umfassend den Schritt des Hygienisierens der sich formenden Formen mit einem ätzenden Reinigungsmittel in der Lagerkammer (5), sodass alle organischen Rückstände beseitigt werden, wobei dieser Schritt des Hygienisierens vor dem Schritt des Einführens des sterilisierenden Wirkstoffs in die Lagerkammer (5) erfolgt.

7. Verfahren nach einem der vorhergehenden Ansprüche, zudem umfassend den Schritt des Trocknens der sich formenden Formen und der Wände, die die Lagerkammer (5) definieren, mittels erhitzter mit Druck beaufschlagter Luft.

## Revendications

1. Procédé pour stériliser et introduire des moules de formage dans une chaîne d'embouteillage aseptique (1), **caractérisé en ce qu'**il comprend les étapes de:
introduire un agent de stérilisation dans une chambre de dépôt (5) logeant les moules, ladite chambre de dépôt (5) étant séparée de la chaîne d'embouteillage (1) et étant à une première pression préétablie (P1);
d'établir une seconde pression préétablie (P2) à l'intérieur de la chambre de dépôt (5), ladite seconde pression étant supérieure à la première pression préétablie (P1);
placer la chambre de dépôt (5) en communication fluidique avec un poste de formage (4) de récipients de la chaîne d'embouteillage (1) de sorte que ladite chambre de dépôt (5) et ledit poste de formage (4) définissent un environnement unique étant microbiologiquement isolé de l'extérieur; transférer les moules de la chambre de dépôt (5) vers le poste de formage (4).

2. Procédé selon la revendication 1, dans lequel l'agent de stérilisation à introduire dans la chambre de dépôt (5) est récupéré par un poste de stérilisation (3) de la chaîne d'embouteillage (1).

3. Procédé selon les revendications 1 ou 2, comprenant de plus l'étape de réchauffer l'agent de stérilisation avant de l'introduire dans la chambre de dépôt (5).

4. Procédé selon l'une quelconque des revendications précédentes, comprenant de plus l'étape de réglage de la concentration d'agent de stérilisation introduit dans la chambre de dépôt (5) de sorte que ladite concentration est maintenue en-dessous d'un niveau maximal préétabli (L).

5. Procédé selon l'une quelconque des revendications précédentes, comprenant de plus l'étape d'évacuation de l'agent de stérilisation usagé de ladite chambre de dépôt (5) après avoir terminé sa stérilisation.

6. Procédé selon l'une quelconque des revendications précédentes, comprenant de plus l'étape d'assainissement des moules de formage avec un détergent caustique à l'intérieur de la chambre de dépôt (5) de sorte à éliminer tout résidu organique, ladite étape d'assainissement ayant lieu avant l'étape d'introduction de l'agent de stérilisation dans la chambre de dépôt (5).

7. Procédé selon l'une quelconque des revendications précédentes, comprenant de plus l'étape de séchage des moules de formage et des parois définissant la chambre de dépôt (5) par de l'air chaud sous pression.
